# EUROPÄISCHE PATENTSCHRIFT

(11) **EP 2 878 554 B1**
(45) Veröffentlichungstag und Bekanntmachung des Hinweises auf die Patenterteilung: **01.02.2017**
(21) Anmeldenummer: 14003806.8
(22) Anmeldetag: 12.11.2014
(51) Int. Cl.: B65G 21/14, B65G 21/20

(54) **Teleskopförderband**
Telescopic conveyor belt
Bande de transport télescopique

(30) Priorität: 28.11.2013 DE 102013018063
(43) Veröffentlichungstag der Anmeldung: 03.06.2015
(73) Patentinhaber: BEUMER GmbH & Co. KG, 59269 Beckum (DE)
(72) Erfinder: Rausch, Udo, 48291 Telgte (DE)
(74) Vertreter: Philipp, Matthias

(56) Entgegenhaltungen:
- DE-A1- 4 006 474
- DE-A1-102010 005 267
- US-A- 2 166 447
- US-A- 4 711 334
- US-B1- 6 345 950

## Beschreibung

Die Erfindung betrifft ein Teleskopförderband nach dem Oberbegriff des Anspruchs 1, wie es aus der US 2,166,447 A bekannt ist.

Ein ähnlicher Teleskopförderer ist aus der EP 1 559 668 B1 bekannt und wird insbesondere für die Be- und Entladung von Laderäumen oder Containern eingesetzt. Dabei soll verhindert werden, dass Stückgut wie beispielsweise Pakete oder Kartons von dem Förderer herunterfallen können. Zu diesem Zweck sind aus der US 3,127,978 Führungsabschnitte bekannt, die entlang des Rahmens des Förderers angebracht sind. Hierbei ist jedoch nachteilig, dass sich die Führungsabschnitte nicht entlang der einzelnen teleskopierbaren Förderabschnitte erstreckten.

Die Aufgabe der Erfindung besteht darin, ein Teleskopförderband mit einer seitlichen Führung für transportierte Gegenstände bereitzustellen, so dass diese nicht seitlich von dem Förderband herunterfallen können. Dabei wird eine kompakte und im eingefahrenen Zustand des Teleskopförderers platzsparende Bauweise angestrebt. Außerdem sollen Spalte, Öffnungen und Querschnittsverjüngungen vermieden werden, und es soll zuverlässig verhindert werden, dass kleinere Stückgutteile oder Teile davon, beispielsweise Bänder, Riemen, Schnallen o.ä., unter den Fördergurt gelangen können.

Diese Aufgabe wird erfindungsgemäß durch ein Teleskopförderband nach Anspruch 1 gelöst.

Es kann vorgesehen sein, dass der Tragbereich der Basis-Leitwanne unmittelbar an die Leitbereiche der Basis-Leitwanne anschließt oder mit diesen in voller Länge verbunden ist, so dass eine geschlossene Wannenform gebildet ist. Weiter kann vorgesehen sein, dass der Tragbereich der Teleskop-Leitwanne unmittelbar an die Leitbereiche der Teleskop-Leitwanne anschließt oder mit diesen in voller Länge verbunden ist, so dass eine geschossene Wannenform gebildet ist.

Relativ zu dem Basis-Förderabschnitt können mehrere aufeinanderfolgende Teleskop-Förderabschnitte in und entgegen der Ausfahrrichtung teleskopartig aus- und einfahrbar sein, insbesondere daran gehalten sein.

Jedem Teleskop-Förderabschnitt kann eine Teleskop-Leitwanne zugeordnet sein, wobei ein dem Basis-Förderabschnitt abgekehrtes Ende einer jeden Teleskop-Leitwanne mit einem Ausfahrende des jeweiligen Teleskop-Förderabschnitts gekoppelt sein kann.

Es kann vorgesehen sein, dass jedem Teleskop-Förderabschnitt mehrere Teleskop-Leitwannen zugeordnet sind, jeweils umfassend eine Auszugs-Leitwanne und mindestens eine damit gekoppelte Folgeleitwanne, wobei ein dem Basis-Förderabschnitt abgekehrtes Ende einer jeden Auszugs-Leitwanne mit einem Ausfahrende des jeweiligen TeleskopFörderabschnitts und ein dem Basis-Förderabschnitt zugekehrtes Ende einer jeden Auszugs-Leitwanne über einen auszugsbegrenzenden Anschlag mit einer Folgeleitwanne gekoppelt ist. Bei mehreren Folgeleitwannen je Teleskop-Förderabschnitt ist jede weitere Folgeleitwanne mit einer in Richtung auf die Auszugs-Leitwanne benachbarten Folgeleitwanne über einen auszugsbegrenzenden Anschlag gekoppelt.

Bevorzugt ist vorgesehen, dass jede einzelne Leitwanne, ob Teleskop-Leitwanne, Auszugs-Leitwanne oder Folgeleitwanne, innerhalb der entgegen der Auszugsrichtung, oder in Richtung des Basis-Förderabschnitts gesehen, zunächstliegenden Leitwanne, ob Teleskop-Leitwanne, Auszugs-Leitwanne oder Folgeleitwanne, angeordnet ist, wobei die der Basis-Leitwanne benachbarte Leitwanne innerhalb der Basis-Leitwanne angeordnet ist. Eine solche Anordnung hat den Vorteil, dass bei einem Betrieb des Teleskopförderbands in einer bevorzugten Förderrichtung, wobei sich das Obertrum des Förderbands entgegen der Ausfahrrichtung oder anders gesagt von einem Ausfahrende des Teleskopförderers in Richtung auf den Basis-Förderabschnitt bewegt, keine Behinderung oder Verklemmwirkung der zwischen benachbarten Leitwannen gebildeten Stufen eintreten kann, da sich die Querschnittsabmessungen jeder einzelnen Leitwanne in Richtung auf die Basis-Leitwanne und damit in der bevorzugten Förderrichtung vergrößern und nicht verkleinern, was bei einer umgekehrten Anordnung der Fall wäre. Alle derartigen Teleskop-, Auszugs-, Folge- oder Basisleitwannen haben die oben beschriebene geschlossene Wannenform.

Bevorzugt beträgt ein Höhenunterschied zwischen zwei benachbarten Leitwannen nicht mehr als das 2fache, 1,5fache oder 1fache einer Materialdicke des Tragbereichs der aufliegenden Leitwanne. Tragbereiche benachbarter Leitwannen können somit unmittelbar oder mit geringem Abstand aufeinanderliegen. Dadurch ergibt sich eine praktisch ebene Förderfläche, da die Materialdicke der Tragbereiche im Verhältnis zu deren Länge sehr klein ist, beispielsweise 5 - 20mm bei einer Länge von bis zu 1 m, 2 m, 3 m oder mehr.

Es kann vorgesehen sein, dass die Tragbereiche benachbarter Leitwannen im voll ausgefahrenen Zustand in gleicher Höhe liegen. Dies kann dadurch erreicht werden, dass ein Ausfahrende eines Teleskop-Förderabschnitts mit Vertikalspiel mit einem dem Basis-Förderabschnitt zugekehrten Ende der oder einer Teleskop-Leitwanne oder einer Auszugs-Leitwanne gekoppelt ist. Hierfür kann an der Teleskop-Leitwanne oder an jeder Auszugs-Leitwanne ein vertikales Langloch und an dem Ausfahrende ein das Langloch durchgreifender Befestigungsbolzen angeordnet sein, oder umgekehrt.

Es kann vorgesehen sein, dass die Teleskop-Leitwanne mittels Führungselementen wie Rollen oder Gleitstücken an der Basis-Leitwanne längsverschieblich geführt ist. Entsprechend kann die oder jede Auszugs-Leitwanne mittels Führungselementen wie Rollen oder Gleitstücken an einer damit gekoppelten Folgeleitwanne längsverschieblich geführt sein.

Die Erfindung wird nachfolgend anhand mehrerer Ausführungsbeispiele unter Bezugnahme auf eine Zeichnung erläutert, wobei die erste, zweite und dritte Ausführungsformen nicht Teil der Erfindung sind, und wobei
Fig. 1 eine Seitenansicht einer ersten Ausführungsform eines Teleskopförderbands im eingefahrenen Zustand zeigt,
Fig. 2 das Teleskopförderband nach Fig. 1 im ausgefahrenen Zustand zeigt,
Fig. 3 eine Querschnittsansicht einer Teleskop-Leitwanne und einer daran mittels Rollen längsverschieblich geführten Folgeleitwanne zeigt,
Fig. 4 eine perspektivische Ansicht eines Übergangsbereichs zwischen einer Teleskop-Leitwanne und einer mittels Rollen daran längsverschieblich geführten Folgeleitwanne zeigt,
Fig. 5 eine vergrößerte Darstellung des in Fig. 3 mit A bezeichneten Bereichs zeigt,
Fig. 6 eine Ansicht entsprechend Fig. 3 für eine Lagerung mittels Kunststoffschienen als Führungselemente zeigt,
Fig. 7 eine Ansicht entsprechend Fig. 6 ohne Führungselemente zeigt,
Fig. 8 eine Seitenansicht einer zweiten Ausführungsform eines Teleskopförderers im eingefahrenen Zustand zeigt,
Fig. 9 eine perspektivische Ansicht des Förderers nach Fig. 8 zeigt,
Fig. 10 eine Seitenansicht des Förderers nach Fig. 8 und 9 im ausgefahrenen Zustand zeigt,
Fig. 11 eine perspektivische Ansicht des Förderers nach Fig. 10 zeigt,
Fig. 12 eine Seitenansicht einer dritten Ausführungsform eines Teleskopförderers im ausgefahrenen Zustand zeigt,
Fig. 13 eine perspektivische Ansicht des Teleskopförderers nach Fig. 12 zeigt,
Fig. 14 eine Seitenansicht einer Ausführungsform eines erfindungsgemäßen Teleskopförderers im eingefahrenen Zustand zeigt,
Fig. 15 eine Seitenansicht des Förderers nach Fig. 14 im ausgefahrenen Zustand zeigt,
Fig. 16 die Kopplung der Basis-Leitwanne an den Basis-Förderabschnitt und die Kopplung der Auszugs-Leitwannen an die jeweiligen Teleskop-Förderabschnitte mittels Befestigungsbolzen und Langlöchern beispielhaft anhand der zweiten Ausführungsform zeigt, und
Fig. 17 - 19 Anschlag- und Führungselemente in einer perspektivischen Ansicht, einer vergrößerten Darstellung und einer Querschnittsansicht beispielhaft anhand der zweiten Ausführungsform zeigen.

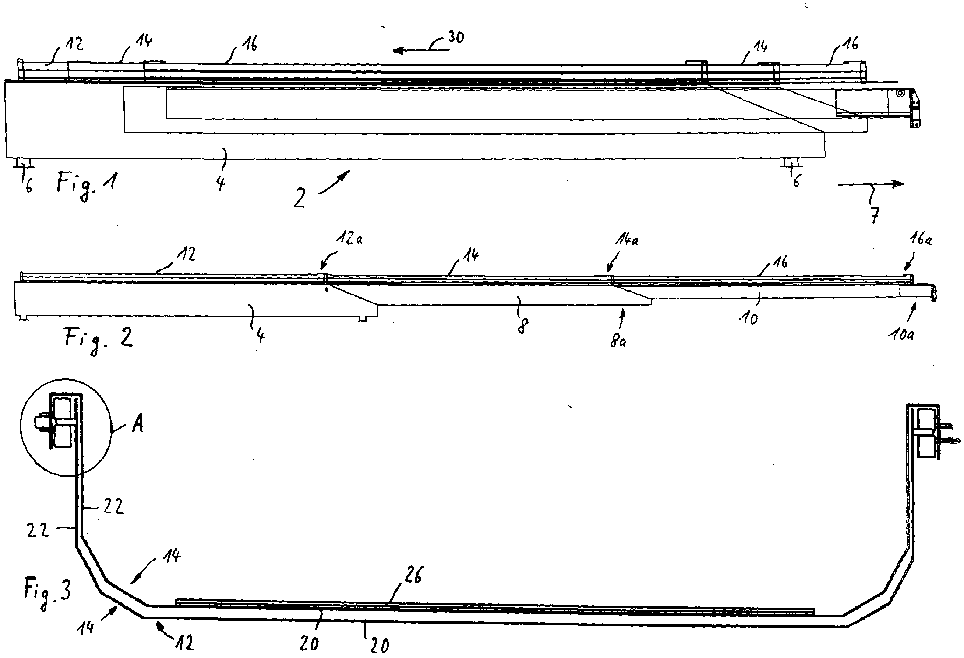

Eine erste Ausführungsform eines Teleskopförderers ist in Fig. 1 und 2 erläutert. Das Teleskopförderband 2 weist einen Basis-Förderabschnitt 4 auf, der beispielsweise durch einen Maschinenrahmen gebildet sein kann, der auf Tragelementen 6 wie Standfüßen, Rollen, Antriebsrädern o.ä. auf einem Untergrund stehen oder darauf verfahrbar sein kann. An oder in dem Basis-Förderabschnitt 4 ist ein erster Teleskop-Förderabschnitt 8 in und entgegen einer Ausfahrrichtung 7 aus- und einfahrbar gelagert, an dem wiederum ein zweiter Teleskop-Förderabschnitt 10 aus- und einfahrbar gehalten ist. Auf dem Basis-Förderabschnitt 4 ist eine im Querschnitt im Wesentlichen U-förmige, nach unten geschlossene Basis-Leitwanne 12 gehalten. Innerhalb und oberhalb der Basis-Leitwanne 12 ist eine erste Teleskop-Leitwanne 14 angeordnet, innerhalb der wiederum eine zweite Teleskop-Leitwanne 16 angeordnet ist.

Die Querschnittsformen der Basis- und Teleskop-Leitwannen 12, 14 und 16 ergeben sich aus Fig. 3, 6 und 7, in denen der Einfachheit halber lediglich zwei ineinander angeordnete Leitwannen 12, 14 dargestellt sind und woraus sich ergibt, dass jede Leitwanne einen Tragbereich 20, der im Wesentlichen eben sein kann, und seitlich unmittelbar, ohne Zwischenraum bzw. Längsspalt an den Tragbereich anschließende erhöhte Leitbereiche 22 aufweist. Alle Leitwannen besitzen somit über ihre volle Länge eine nach unten geschlossene Wannenform, die ein Herausfallen auch kleiner Gegenstände zuverlässig verhindert.

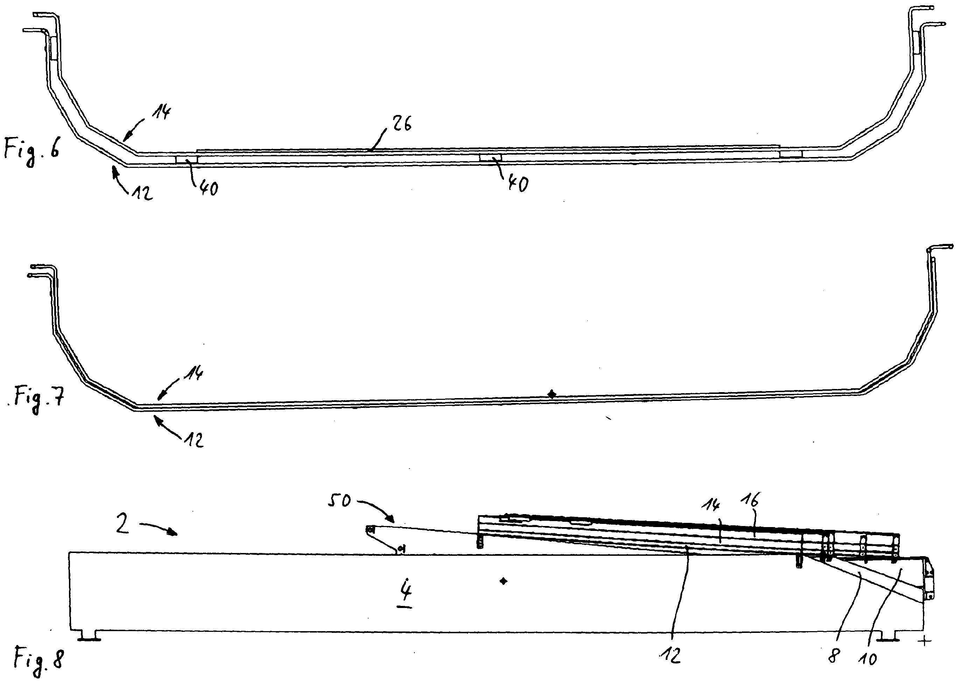

Ein in Fig. 3 und 6, nicht jedoch in Fig. 1 und 2 dargestellter Fördergurt 26 ist endlos um den Basis-Förderabschnitt 4 und die Teleskop-Förderabschnitte 8, 10 geführt, wie es bei Teleskopförderbändern allgemein bekannt ist, mit einem innerhalb des Basis-Förderabschnitt angeordneten Antrieb und einem Gurtspeichermechanismus, mit dem die Längenänderung der ausgefahrenen Bereiche der Teleskop-Förderabschnitte kompensiert werden kann. Ein Obertrum des Fördergurts 26 verläuft oberseitig des Basis-Förderabschnitts 4 und der Teleskop-Förderabschnitte 8, 10, wobei die Leitwannen 12, 14 und 16 zwischen dem Fördergurt 26 und dem Basis-Förderabschnitt 4 bzw. dem ersten und zweiten Teleskop-Förderabschnitt 8, 10 angeordnet sind.

Die Oberseite des Tragbereichs 20 der Leitwannen 12, 14, 16 bildet somit eine Auflagefläche für eine Unterseite bzw. Innenseite des Fördergurts im Bereich seines Obertrums, während die Leitbereiche 22 ein Abgleiten oder Herunterfallen einzelner Stückgüter von dem Fördergurt verhindern.

Im regulären Betrieb arbeitet der Teleskopförderer 2 in einer Förderrichtung 30, die entgegen der Ausfahrrichtung 7 gerichtet ist, wobei sich das Obertrum des Fördergurts 26 in Förderrichtung 30 bewegt, so dass beispielsweise ein Container, der sich in Reichweite der ausfahrbaren Teleskop-Förderabschnitte 8, 10 befindet, in Förderrichtung 30 entladen werden kann. Selbstverständlich kann vorgesehen sein, dass die Förderrichtung bedarfsweise umgekehrt wird.

Während die Basis-Leitwanne 12 an dem Basis-Förderabschnitt 4 gehalten oder befestigt ist, ist die erste Teleskop-Leitwanne 14 mit ihrem in Förderrichtung 30 gesehen hinteren Ende 14a mit dem ersten Teleskop-Förderabschnitt 8 gekoppelt, insbesondere mit dessen Ausfahrende 8a. In entsprechender Weise ist die zweite Teleskop-Leitwanne 16 mit ihrem in Förderrichtung 30 gesehen hinteren Ende 16a mit dem zweiten Teleskop-Förderabschnitt 10 gekoppelt, und zwar zweckmäßigerweise mit dessen Ausfahrende 10a.

Da die Länge der Basis-Leitwanne 12 im Wesentlichen der Länge des Basis-Förderabschnitts 4 entspricht, die Länge der ersten Teleskop-Leitwanne 14 im Wesentlichen einem Ausfahrweg des ersten Teleskop-Förderabschnitts 8 entspricht und die Länge der zweiten Teleskop-Leitwanne 16 im Wesentlichen einem Ausfahrweg des zweiten Teleskop-Förderabschnitts 10 entspricht, ist sichergestellt, dass in jeder Ausfahrstellung des Teleskop-Förderbands 2 die Teleskop-Leitwannen 12, 14, 16 wenigstens teilweise einander überlappend angeordnet sind und eine ununterbrochene Abstützfläche für den Fördergurt in Form der Tragbereiche 20 und eine lückenlose untere und seitliche Führung für Stückgüter in Form der Leitbereiche 22 und gegebenenfalls der seitlichen Ränder der Tragbereiche 20 bilden.

Fig. 3 bis 5 erläutern eine erste Variante der Lagerung der längsverschieblich ineinander angeordneten Leitwannen, wobei der Einfachheit halber lediglich die Basis-Leitwanne 12 und die erste Teleskop-Leitwanne 14 dargestellt sind. Zunächst sei noch darauf verwiesen, dass der in Fig. 3 bis 7 eben dargestellte Tragbereich 20 grundsätzlich jede geeignete und zweckmäßige Form besitzen kann, beispielsweise konkav gewölbt sein kann, und dass auch die Leitbereiche 22 grundsätzlich jede geeignete und zweckmäßige Form annehmen können, beispielsweise vertikal (in Vertikalrichtung 32) verlaufen können, oder beliebig abgewinkelt oder gewölbt sein können. Die Leitwannen können aus Metall, Kunststoff oder einem Verbundmaterial bestehen.

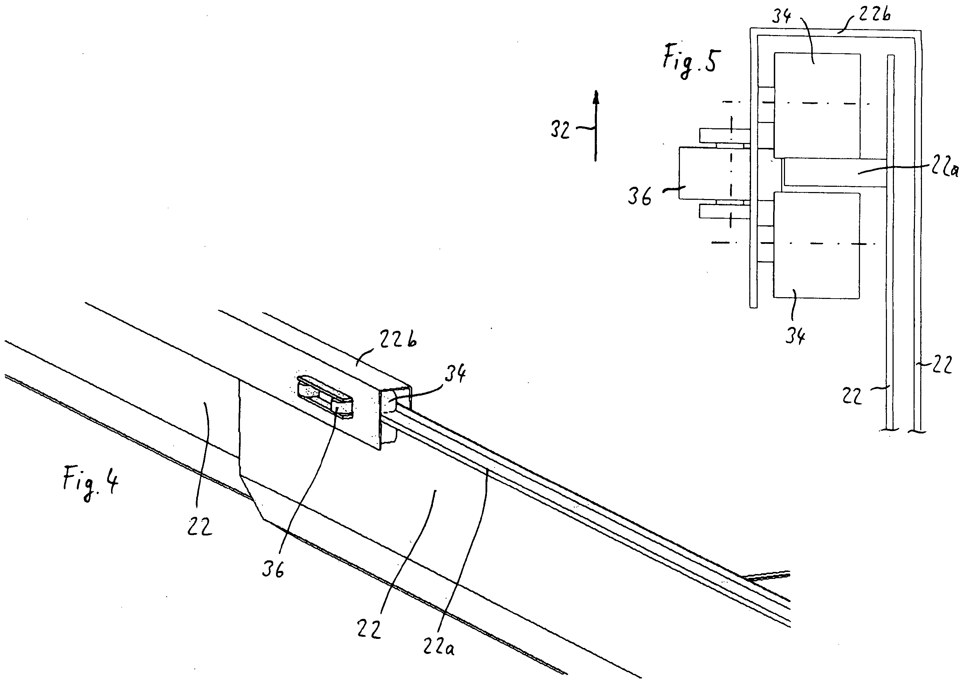

Wie Fig. 4 und 5 deutlich erkennen lassen, weist die unter- und außerhalb der ersten Teleskop-Leitwanne 14 angeordnete Basis-Leitwanne 12 einen vertikal nach oben frei endenden Leitbereich 22 auf, an dem ein horizontaler Führungsflansch 22a angeordnet ist. Die oberund innerhalb der Basis-Leitwanne 12 angeordnete erste Teleskop-Leitwanne 14 ist hingegen am oberen Ende ihres Leitbereichs 22 mit einem umgekehrt U-förmigen Führungsprofil 22b versehen, das den Leitbereich 22 der Basis-Leitwanne 12 übergreift und an dem paarweise angeordnete, um horizontale Drehachsen drehbare Vertikalführungsrollen 34 und paarweise angeordnete, um vertikale Drehachsen drehbare Horizontalführungsrollen 36 gehalten sind. Zwischen den Vertikalführungsrollen 34 ist der Führungsflansch 22a erkennbar, auf dessen seitlich nach außen weisender Stirnseite die Horizontalführungsrollen 36 laufen und eine horizontale Verschiebung der beiden Leitwannen 12, 14 relativ zueinander verhindern.

Fig. 6 zeigt eine Variante zu der Führung der Leitwannen mittels Kunststoffschienen 40, die an der Unterseite der ersten Teleskop-Leitwanne 14 angebracht sind und auf der Ober- oder Innenseite der Basis-Leitwanne 12 gleiten. Fig. 7 schließlich zeigt aus Kunststoff oder einem sonstigen leicht gleitfähigen Material bestehende Leitwannen, bei denen auf gesonderte Führungselemente wie Rollen oder Kunststoffschienen verzichtet werden kann.

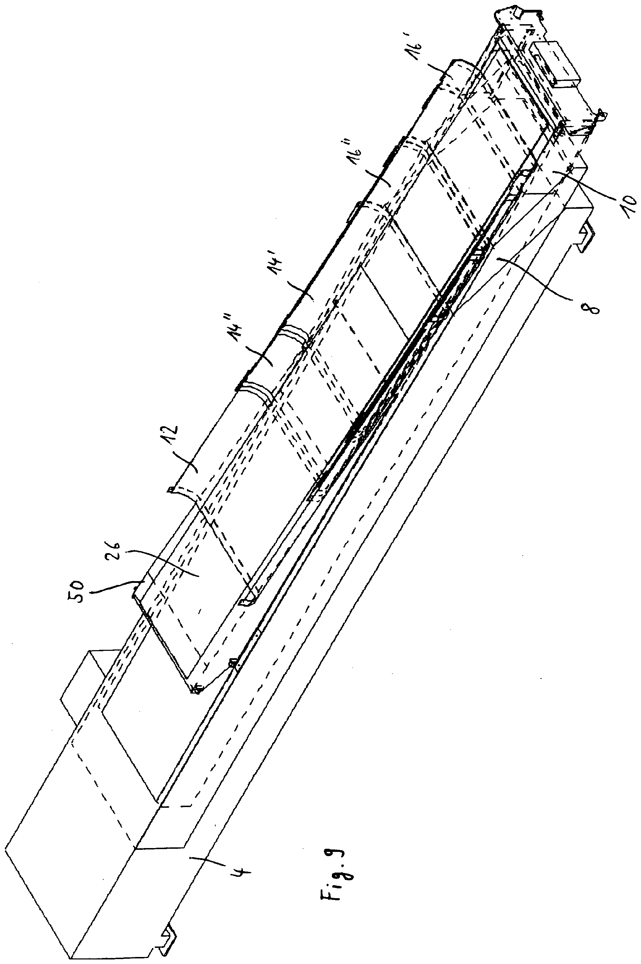

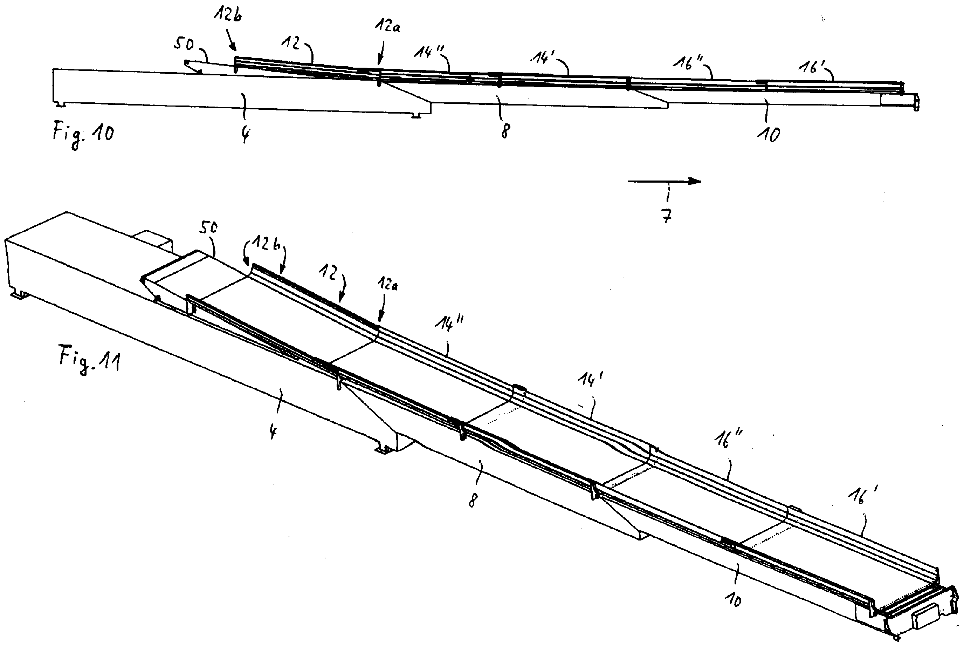

Fig. 8 bis 11 erläutern eine zweite Ausführungsform eines Teleskopförderbands, wobei auf dem Basis-Förderabschnitt 4 ein Aufsatz 50 zur erhöhten Montage eines in Ausfahrrichtung 7 gesehen hinteren Endes, oder des den Teleskop-Förderabschnitten 8, 10 abgekehrten Endes 12b der Basis-Leitwanne 12 angeordnet ist, so dass die Basis-Leitwanne 12 ein Gefälle entgegen der Ausfahrrichtung 7 oder in Richtung der Teleskop-Förderabschnitte 8, 10 aufweist. Der Aufsatz 50 dient insbesondere dem Zweck, das durch das vordere Ende 12b der Basis-Leitwanne 12 gebildete Abgabeende des Teleskopförderers 2 gegenüber dem Basis-Förderabschnitt 4 erhöht anzuordnen, so dass darunter ein weiterer Förderer platziert werden kann.

Wie Fig. 8 zeigt, nehmen im eingefahrenen Zustand nicht nur die Basis-Leitwanne 12, sondern auch die auf bzw. in diese teleskopierten ersten und zweiten Teleskop-Leitwannen 14, 16 eine relativ zu dem Basis-Förderabschnitt 4 und der Ausfahrrichtung 7 der Teleskop-Förderabschnitte 8, 10 geneigte Stellung ein.

Bei der in Fig. 8 bis 11 dargestellten Ausführungsform besteht gegenüber der ersten Ausführungsform noch der Unterschied, dass jedem Teleskop-Förderabschnitt 8, 10 nicht nur eine Teleskop-Leitwanne zugeordnet ist, sondern zwei Leitwannen in Form einer mit dem ersten Teleskop-Förderabschnitt 8 gekoppelten ersten Auszugs-Leitwanne 14' und einer mit dieser gekoppelten ersten Folgeleitwanne 14", und in Form einer mit dem zweiten TeleskopFörderabschnitt 10 gekoppelten zweiten Auszugs-Leitwanne 16' und einer mit dieser gekoppelten zweiten Folgeleitwanne 16". Die Folgeleitwannen 14", 16" sind mit den Auszugs-Leitwannen 14', 16' über einen auszugsbegrenzenden Anschlag gekoppelt. Jede Folgeleitwanne kann an der ihr zugeordneten Auszugs-Leitwanne entsprechend Fig. 3 bis 7 gelagert sein.

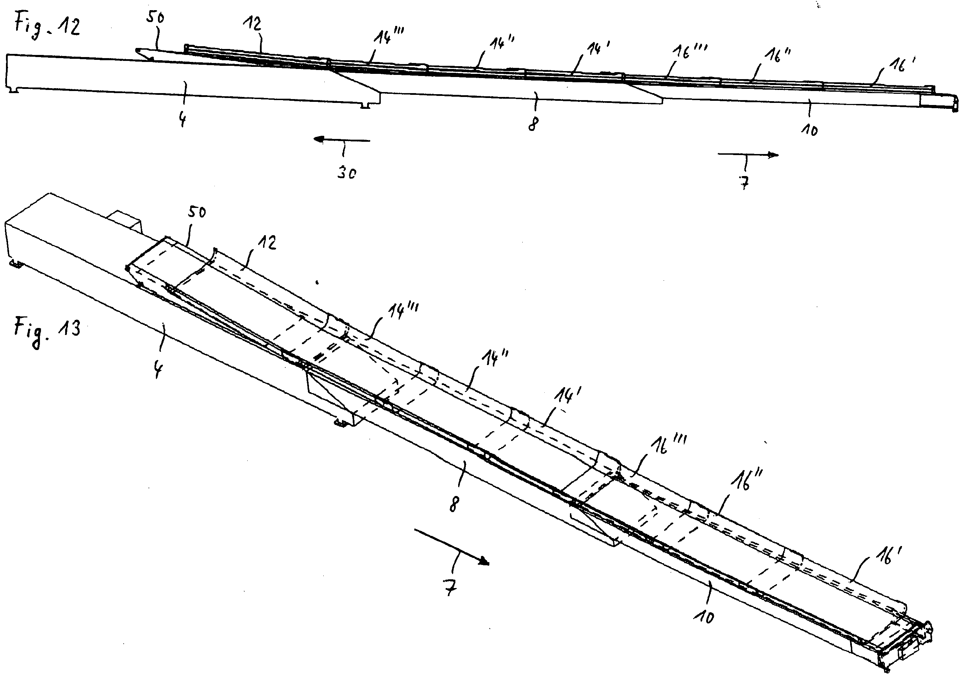

Fig. 12 und 13 zeigen eine dritte Ausführungsform, die sich von der zweiten Ausführungsform nach Fig. 8 bis 11 dadurch unterscheidet, dass auf jedem Teleskop-Förderabschnitt 8, 10 nicht nur eine Auszugs-Leitwanne und eine mit dieser gekoppelte Folgeleitwanne vorhanden sind, sondern dass je Teleskop-Förderabschnitt drei Leitwannen vorgesehen sind, nämlich auf dem ersten Teleskop-Förderabschnitt 8 eine mit diesem gekoppelte erste Auszugs-Leitwanne 14', eine mit dieser gekoppelte erste Folgeleitwanne 14" und eine wiederum mit dieser gekoppelte weitere erste Folgeleitwanne 14"', und auf dem zweiten Teleskop-Förderabschnitt 10 eine mit diesem gekoppelte zweite Auszugs-Leitwanne 16', eine mit dieser gekoppelte zweite Folgeleitwanne 16" und eine wiederum mit dieser gekoppelte weitere zweite Folgeleitwanne 16"'. Alle Folgeleitwannen sind untereinander und mit der jeweiligen Auszugs-Leitwanne über auszugsbegrenzende Anschläge gekoppelt, und sie können an der jeweils zugeordneten Auszugs-Leitwanne entsprechend Fig. 3 bis 7 gelagert sein.

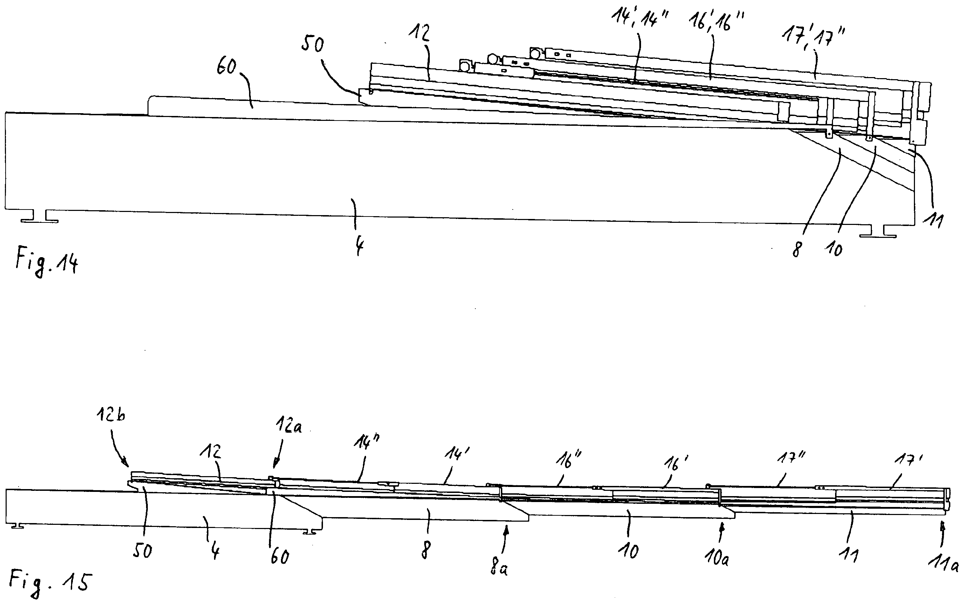

Fig. 14 und 15 zeigen eine vierte Ausführungsform eines erfindungsgemäßen Teleskopförderbands, wobei im Bereich des Basis-Förderabschnitts 4 zusätzlich ein Keilelement 60 vorgesehen ist. Fig. 14 zeigt das Teleskopförderband in der eingefahrenen Stellung, während Fig. 15 die ausgefahrene Stellung zeigt. Das Keilelement 60 ist zwischen dem Basis-Förderabschnitt 4 und der mit diesem gekoppelten Basis-Leitwanne 12 angeordnet und mit dem ersten Teleskop-Förderabschnitt 8 verbunden. Beim Ausfahren des ersten Teleskop-Förderabschnitts 8 relativ zu dem Basis-Förderabschnitt in Ausfahrrichtung 7 wird somit auch das Keilelement 60 in Ausfahrrichtung 7 relativ zu dem Basis-Förderabschnitt 4 und der Basis-Leitwanne 12 verschoben und gelangt, wie Fig. 15 zeigt, zwischen die erste Teleskop-Leitwanne 14 und den ausgefahrenen ersten Teleskop-Förderabschnitt 8, so dass die Basis-Leitwanne 12 relativ zu dem Basis-Förderabschnitt 4 angehoben wird. Optional kann zusätzlich auch die erste Folgeleitwanne 14" und die erste Auszugs-Leitwanne 14' relativ zu dem ersten Teleskopförderabschnitt 8 angehoben werden. Dadurch soll ein Durchhang des Gurtes vermieden werden.

Das Teleskopförderband nach der vierten Ausführungsform verfügt im Unterschied zur zweiten Ausführungsform nicht nur über zwei, sondern über drei ausfahrbare Teleskop-Förderabschnitte, nämlich einen ersten, relativ zu dem Basis-Förderabschnitt 4 ausfahrbaren und an diesem geführten Teleskop-Förderabschnitt 8, einen zweiten, relativ zu dem ersten Teleskop-Förderabschnitt 8 ausfahrbaren und an diesem geführten Teleskop-Förderabschnitt 10 und einen dritten, relativ zu dem zweiten Teleskop-Förderabschnitt 10 ausfahrbaren und an diesem geführten Teleskop-Förderabschnitt 11. Obwohl auf dem ersten Teleskop-Förderabschnitt 8 eine erste Teleskop-Leitwanne angeordnet sein könnte, wie bei der ersten Ausführungsform, sind darauf wie bei der zweiten Ausführungsform eine erste Auszugs-Leitwanne 14' und eine damit gekoppelte erste Folgeleitwanne 14" angeordnet, wobei ein in Ausfahrrichtung 7 gesehen vorderes Ende der ersten Auszugs-Leitwanne 14' an einem Ausfahrende 8a des ersten Teleskop-Förderabschnitts 8 gehalten ist. In entsprechender Weise sind auf dem zweiten Teleskop-Förderabschnitt 10 eine zweite Auszugs-Leitwanne 16' und eine damit gekoppelte zweite Förderleitwanne 16" angeordnet, wobei ein in Ausfahrrichtung 7 gesehen vorderes Ende der zweiten Auszugs-Leitwanne 16' mit einem Ausfahrende 10a des zweiten Teleskop-Förderabschnitts 10 gekoppelt ist. Weiterhin sind in entsprechender Weise auf dem dritten Teil-Förderabschnitt 11 eine dritte Auszugs-Leitwanne 17' und eine damit gekoppelte dritte Folgeleitwanne 17" angeordnet, wobei ein in Ausfahrrichtung 7 gesehen vorderes Ende der dritten Auszugs-Leitwanne 17' an einem Ausfahrende 11a des dritten Teleskop-Förderabschnitts 11 gehalten ist.

Das Keilelement 60 befindet sich somit im ausgezogenen Zustand nach Fig. 13 zwischen dem ersten Teleskop-Förderabschnitt 8 und der ersten Auszugs-Leitwanne 14' sowie der Folgeleitwanne 14" und hebt diese von dem ersten Teleskop-Förderabschnitt 8 ab.

Das Keilelement 60 hat eine ausreichende Länge, so dass es sich im ausgefahrenen Zustand des Teleskopförderbands nach Fig. 15 nicht nur auf dem ersten Teleskop-Förderabschnitt 8 befindet, sondern zum Teil auch noch auf dem Basis-Förderabschnitt 4, so dass sich auch das den Teleskop-Förderabschnitten 8, 10 zugekehrte oder in Ausfahrrichtung 7 gesehen vordere Ende 12a der Basis-Leitwanne 12 auf dem Keilelement 60 befindet und von diesem angehoben wird. Dies führt zu einem Höhenausgleich zwischen der Basis-Leitwanne 12, der ersten Teleskop-Leitwanne 14 (bzw. der ersten Auszugs-Leitwanne 14' und der ersten Folgeleitwanne 14") und den entgegen der Förderrichtung 30 folgenden, auf den weiteren Teleskop-Förderabschnitten angeordneten Teleskop-Leitwannen, so dass der Fördergurt geringstmöglich durchhängt und auch bei größerer Gurtspannung nicht dazu neigt, von einzelnen Teleskop-Leitwannen abzuheben. Kleinere Stückgutteile können somit nicht unter den Fördergurt gelangen.

Bei der ersten Ausführungsform nach Fig. 1 und 2 kann die Basis-Leitwanne fest an dem Basis-Förderabschnitt 4 angebracht sein, und die Teleskop-Leitwannen 14, 16 können jeweils fest mit den Teleskop-Förderabschnitten 8, 10 verbunden sein, da es bei der Aus- und Einfahrbewegung nicht zwangsläufig zu Höhenveränderungen der Teleskop-Leitwannen kommt. Dennoch kann es zweckmäßig sein, wenn die erste und zweite Teleskop-Leitwanne 14, 16 mit Vertikalspiel an den Teleskop-Förderabschnitten 8, 10 angebracht sind, damit die in Auszugsrichtung 7 gesehen vorderen Enden der Teleskop-Leitwannen 14, 16, die an den Ausfahrenden 8a, 10a gehalten sind, die Möglichkeit haben, im ausgefahrenen Zustand (Fig. 2) auf dem jeweiligen Teleskop-Förderabschnitt aufzuliegen. Dies wäre ansonsten nicht der Fall, da die erste Teleskop-Leitwanne 14 innerhalb und auf der Basis-Leitwanne 12 liegt und die zweite Teleskop-Leitwanne 16 innerhalb und auf der ersten Teleskop-Leitwanne 14 liegt, gemäß Fig. 7, oder über Führungselemente gemäß Fig. 3 oder Fig. 6 darauf abgestützt ist, wodurch sich zwangsläufig im ausgefahrenen Zustand ein vertikaler Abstand zwischen einem TeleskopFörderabschnitt und einer darüber angeordneten Teleskop-Leitwanne ergibt, der umso größer ist, je mehr Teleskop-Leitwannen ineinander bzw. aufeinander angeordnet sind und je größer deren Dickenabmessungen sind. Ein solcher Abstand ist hingegen unerwünscht, vielmehr sollten die Leitwannen auf den Teleskop-Förderabschnitten aufliegen.

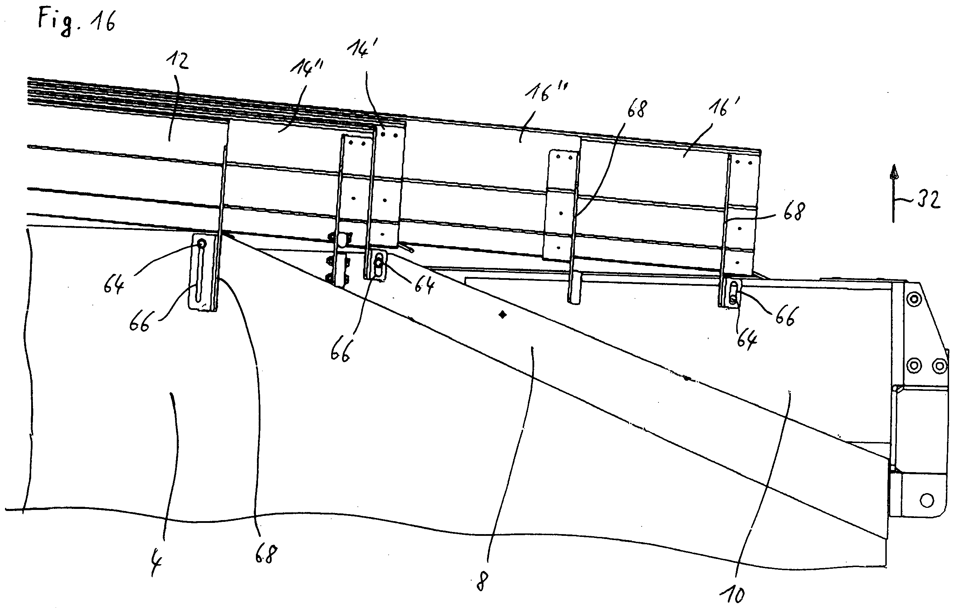

Um eine solche Auflage der Teleskop-Leitwannen auf den Teleskop-Förderabschnitten zu ermöglichen, sind die Teleskop-Leitwannen an ihren in Ausfahrrichtung gesehen vorderen Ende mit Vertikalspiel an den Teleskop-Förderabschnitten gehalten, wie in Fig. 16 dargestellt ist. Am Ausfahrende eines jeden Teleskop-Förderabschnitts 8, 10 ist ein horizontaler Befestigungsbolzen 64 angeordnet, der in ein vertikal ausgerichtetes Langloch 66 einer jeweiligen Teleskop-Leitwanne oder Auszugs-Leitwanne 14', 16' bzw. Folgeleitwanne eingreift. An dem jeweiligen in Auszugsrichtung 7 gesehen vorderen Ende der Auszugs-Leitwannen 14', 16' ist beiderseits des jeweiligen Teleskop-Förderabschnitts 8, 10 jeweils ein Montagewinkel 68 angebracht, in dem ein Langloch 66 eingebracht ist, so dass eine um eine horizontale Querachse schwenkbare und außerdem höhenveränderbare Kopplung zwischen einer Auszugs-Leitwanne und einem Teleskop-Förderabschnitt hergestellt ist.

In entsprechender Weise ist bei der dritten Ausführungsform, bei der ein Keilelement 60 vorgesehen ist, die Basis-Leitwanne 12 mit Vertikalspiel an dem Basis-Förderabschnitt 4 gehalten, was ebenfalls in Fig. 16 dargestellt ist. Bei Verlagerung des Keilelements 60 wird die Basis-Leitwanne 12 relativ zu dem Basis-Förderabschnitt 4 angehoben oder abgesenkt, so dass die genannte vertikale Bewegungsmöglichkeit vorgesehen ist.

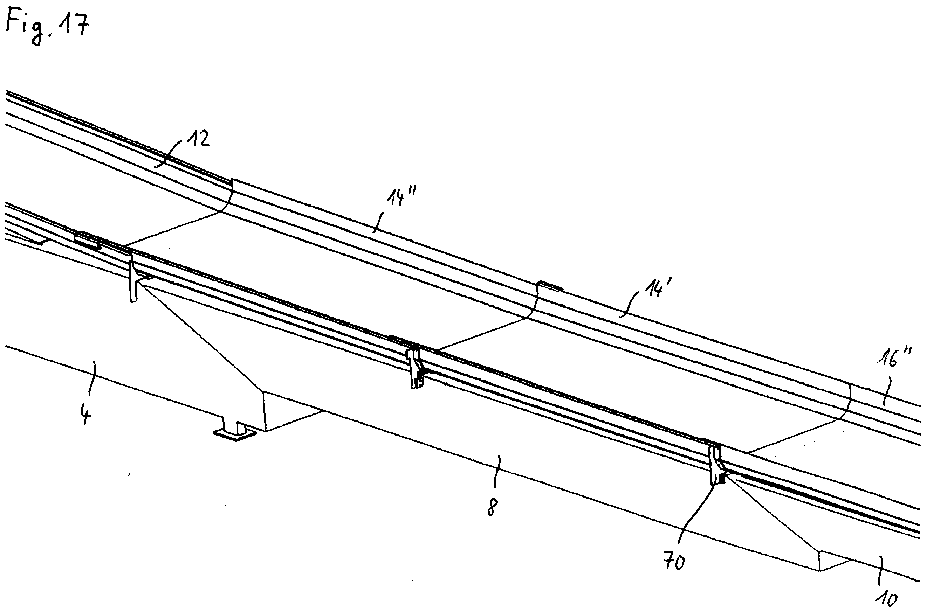

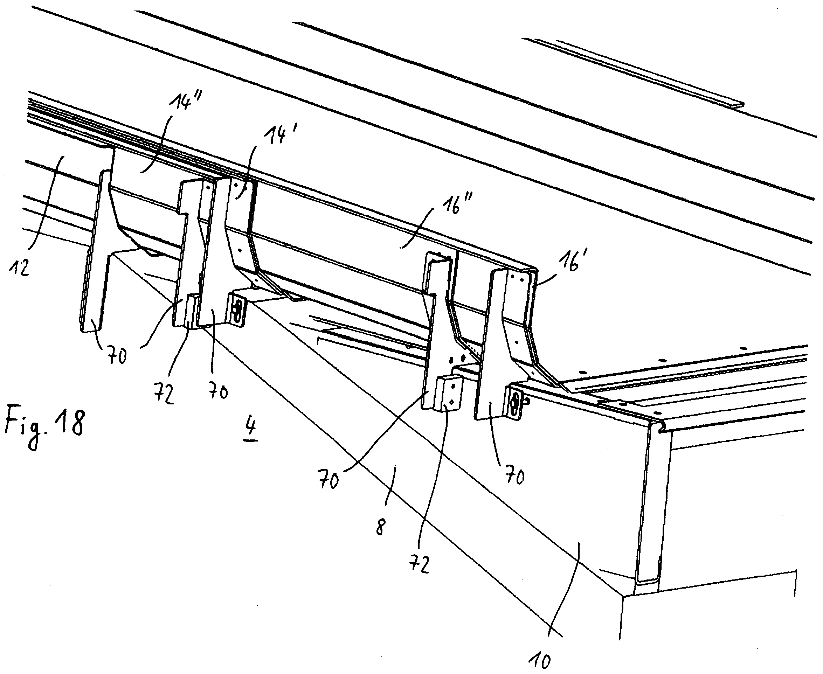

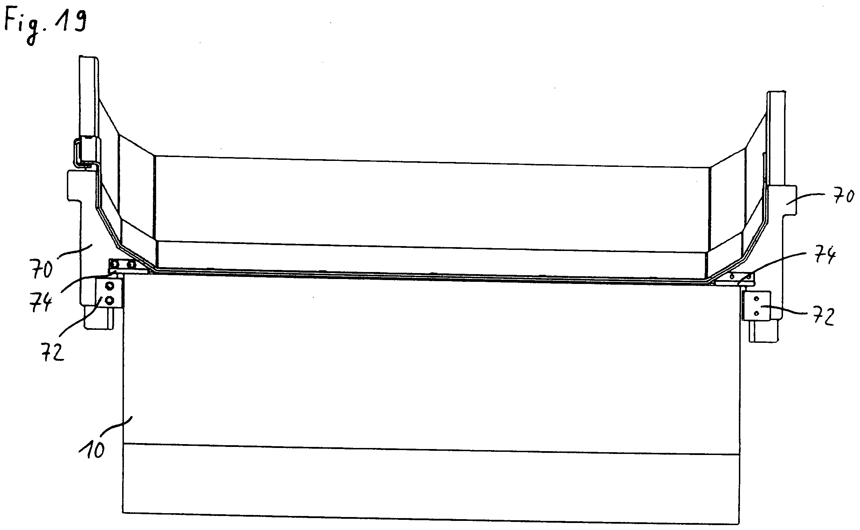

Fig. 17 bis 19 erläutern zunächst auszugsbegrenzende Anschläge 70, die einen übermäßig weiten Auszug einzelner Folgeleitwannen in Bezug auf die sie führenden Auszugs-Leitwannen verhindern. Weiterhin dargestellt sind seitliche Führungselemente 72 und Trag-Führungselemente 74, mit denen einzelne Folgeleitwannen auf dem sie tragenden TeleskopFörderabschnitt seitlich und aufliegend längsverschieblich geführt sind. Fig. 19 zeigt zwei seitliche Führungselemente 72 und zwei Trag-Führungselemente 74 in Zusammenwirken mit einem beispielhaft dargestellten zweiten Teleskop-Förderabschnitt 10.

### Bezugszeichenliste

- 2: Teleskopförderband
- 4: Basis-Förderabschnitt
- 6: Tragelement
- 7: Ausfahrrichtung
- 8: erster Teleskop-Förderabschnitt
- 8a: Ausfahrende
- 10: zweiter Teleskop-Förderabschnitt
- 10a: Ausfahrende
- 11: dritter Teleskop-Förderabschnitt
- 11a: Ausfahrende
- 12: Basis-Leitwanne
- 12a: hinteres Ende
- 12b: vorderes Ende
- 14: erste Teleskop-Leitwanne
- 14a: hinteres Ende
- 14': erste Auszugs-Leitwanne
- 14": erste Folgeleitwanne
- 14"': weitere erste Folgeleitwanne
- 16: zweite Teleskop-Leitwanne
- 16a: hinteres Ende
- 16': zweite Auszugs-Leitwanne
- 16": zweite Folgeleitwanne
- 16'": weitere zweite Folgeleitwanne
- 17': dritte Auszugs-Leitwanne
- 17": dritte Folgeleitwanne
- 20: Tragbereich
- 22: Leitbereich
- 22a: Führungsflansch
- 22b: Führungsprofil
- 26: Förderband
- 30: Förderrichtung
- 32: Vertikalrichtung
- 34: Vertikalführungsrolle
- 36: Horizontalführungsrolle
- 40: Kunststoffschiene (Gleitstück)
- 50: Aufsatz
- 60: Keilelement
- 64: Befestigungsbolzen
- 66: Langloch
- 68: Montagewinkel
- 70: auszugsbegrenzender Anschlag
- 72: seitliches Führungselement
- 74: Trag-Führungselement

## Patentansprüche

1. Teleskopförderband (2), mit einem Basis-Förderabschnitt (4), einem an dem Basis-Förderabschnitt (4) gehaltenen Teleskop-Förderabschnitt (8), der in und entgegen einer Ausfahrrichtung (7) relativ zu dem Basis-Förderabschnitt (4) teleskopartig aus- und einfahrbar ist, einem endlos umlaufenden Förderband (26), das eine Förderoberfläche bildet und mit seinem Obertrum entlang einer Oberseite des Basis-Förderabschnitts (4) und des TeleskopFörderabschnitts (8) geführt ist, einer nach unten geschlossenen Basis-Leitwanne (12), die zwischen dem Fördergurt (26) und dem Basis-Förderabschnitt (4) angeordnet ist und einen Tragbereich (20) zur Aufnahme des Förderbands (26) und seitlich an den Tragbereich (20) anschließende erhöhte Leitbereiche (22) aufweist, und einer nach unten geschlossenen Teleskop-Leitwanne (14), die zwischen dem Förderband (26) und dem Teleskop-Förderabschnitt (8) angeordnet ist und einen Tragbereich (20) zur Aufnahme des Förderbands (26) und seitlich an den Tragbereich (20) anschließende erhöhte Leitbereiche (22) aufweist, wobei die Basis-Leitwanne (12) mit dem Basis-Förderabschnitt (4) gekoppelt ist und die Teleskop-Leitwanne (14) mit einem Ausfahrende (8a) des Teleskop-Förderabschnitts (8) gekoppelt ist, wobei die Teleskop-Leitwanne (14) teleskopartig relativ zu der Basis-Leitwanne (12) ausund einfahrbar ist, und wobei das Teleskopförderband (2) zwischen einer eingefahrenen Stellung, in der der Teleskop-Förderabschnitt (8) relativ zu dem Basis-Förderabschnitt (4) eingefahren ist und die Teleskop-Leitwanne (14) teleskopartig relativ zu der Basis-Leitwanne (12) eingefahren ist, und einer ausgefahrenen Stellung, in der der Teleskop-Förderabschnitt (8) wenigstens teilweise relativ zu dem Basis-Förderabschnitt (4) ausgefahren ist und die Teleskop-Leitwanne (14) wenigstens teilweise relativ zu der Basis-Leitwanne (12) ausgefahren ist, verstellbar ist, **dadurch gekennzeichnet, dass** auf dem Basis-Förderabschnitt (4) ein Aufsatz (50) zur erhöhten Montage eines dem Teleskop-Förderabschnitt (8) abgekehrten Endes (12b) der Basis-Leitwanne (12) angeordnet ist, wobei die Basis-Leitwanne (12) ein Gefälle in Richtung des Teleskop-Förderabschnitts (8) aufweist, und dass auf dem Basis-Förderabschnitt (4) ein Keilelement (60) in und entgegen der Förderrichtung verschieblich geführt und mit dem oder einem Teleskop-Förderabschnitt (8) gekoppelt ist, wobei in der eingefahrenen Stellung die Basis-Leitwanne (12) mit ihrem dem Teleskop-Förderabschnitt zugekehrten Ende (12a) auf einem Anfangsbereich des Keilelements (60) in einer ersten Höhe über oder unmittelbar auf dem Basis-Förderabschnitt (4) aufliegt, und in der ausgefahrenen Stellung die Basis-Leitwanne (12) mit ihrem dem Teleskop-Förderabschnitt (8) zugekehrten Ende (12a) auf einem Endbereich des Keilelements (60) in einer zweiten Höhe über dem Basis-Förderabschnitt (4) aufliegt, wobei die zweite Höhe größer als die erste Höhe ist.

2. Teleskopförderband nach Anspruch 1, **dadurch gekennzeichnet, dass** relativ zu dem Basis-Förderabschnitt (4) mehrere aufeinanderfolgende Teleskop-Förderabschnitte (8, 10, 11) in und entgegen der Ausfahrrichtung (7) teleskopartig aus- und einfahrbar sind.

3. Teleskopförderband nach Anspruch 1 oder 2, **dadurch gekennzeichnet, dass** jedem Teleskop-Förderabschnitt (8, 10, 11) eine Teleskop-Leitwanne (14, 16, 17', 17") zugeordnet ist, wobei ein dem Basis-Förderabschnitt (4) abgekehrtes Ende einer jeden Teleskop-Leitwanne mit einem Ausfahrende (8a, 10a, 11a) des jeweiligen Teleskop-Förderabschnitts (8, 10, 11) gekoppelt ist.

4. Teleskopförderband nach einem der vorangehenden Ansprüche, **dadurch gekennzeichnet, dass** jedem Teleskop-Förderabschnitt (8, 10, 11) mehrere Teleskop-Leitwannen zugeordnet sind, jeweils umfassend eine Auszugs-Leitwanne (14', 16', 17') und mindestens eine damit gekoppelte Folgeleitwanne (14", 16", 17"), wobei ein dem Basis-Förderabschnitt (4) abgekehrtes Ende einer jeden Auszugs-Leitwanne mit einem Ausfahrende (8a, 10a, 11a) des jeweiligen Teleskop-Förderabschnitts gekoppelt ist und ein dem Basis-Förderabschnitt (4) zugekehrtes Ende einer jeden Auszugs-Leitwanne über einen auszugsbegrenzenden Anschlag mit einer Folgeleitwanne gekoppelt ist.

5. Teleskopförderband nach einem der vorangehenden Ansprüche, **dadurch gekennzeichnet, dass** ein Ausfahrende (8a, 10a, 11a) eines Teleskop-Förderabschnitts (8, 10, 11) mit Vertikalspiel mit einem dem Basis-Förderabschnitt abgekehrten Ende einer Teleskop-Leitwanne (14, 16) oder einer Auszugs-Leitwanne (14', 16', 17') gekoppelt ist.

6. Teleskopförderband nach Anspruch 5, **dadurch gekennzeichnet, dass** an der Teleskop-Leitwanne (14, 16) oder an jeder Auszugs-Leitwanne (14', 16', 17') ein vertikales Langloch (66) und an dem Ausfahrende (8a, 10a, 11a) eines Teleskopförderabschnitts (8, 10, 11) ein das Langloch (66) durchgreifender Befestigungsbolzen (64) angeordnet ist, oder umgekehrt.

7. Teleskopförderband nach einem der vorangehenden Ansprüche, **dadurch gekennzeichnet, dass** die Teleskop-Leitwanne (14) mittels Führungselementen wie Rollen (34, 36) oder Gleitstücken (40) an der Basis-Leitwanne (12) längsverschieblich geführt ist.

8. Teleskopförderband nach einem der vorangehenden Ansprüche, **dadurch gekennzeichnet, dass** die oder jede Auszugs-Leitwanne (14', 16', 17') mittels Führungselementen wie Rollen (34, 36) oder Gleitstücken (40) an einer damit gekoppelten Folgeleitwanne (14", 16", 17") längsverschieblich geführt ist.

## Claims

1. Telescopic conveyor belt (2), with a base conveyor section (4), a telescopic conveyor section (8) which is held on the base conveyor section (4) and which can be extended and retracted telescopically, in and counter to a direction of extension (7), relative to the base conveyor section (4), an endlessly circulating conveyor belt (26) which forms a conveyor surface and which, with its carrying run, is led along an upper surface of the base conveyor section (4) and of the telescopic conveyor section (8), a base guide trough (12) which is closed on the underside and which is arranged between the conveyor belt (26) and the base conveyor section (4) and which has a carrying area (20) for accommodating the conveyor belt (26) and has raised guide areas (22) following on laterally from the carrying area (20), and a telescopic guide trough (14) which is closed on the underside and is arranged between the conveyor belt (26) and the telescopic conveyor section (8) and has a carrying area (20) for accommodating the conveyor belt (26) and has raised guide areas (22) following on laterally from the carrying area (20),
wherein the base guide trough (12) is coupled to the base conveyor section (4) and the telescopic guide trough (14) is coupled to an extension end (8a) of the telescopic conveyor section (8),
wherein the telescopic guide trough (14) can be extended and retracted telescopically relative to the base guide trough (12), and
wherein the telescopic conveyor belt (2) is adjustable between a nested position, in which the telescopic conveyor section (8) is driven in relative to the base conveyor section (4) and the telescopic guide trough (14) is driven in telescopically relative to the base guide trough (12), and an extended position in which the telescopic conveyor section (8) is extended at least partially relative to the base conveyor section (4) and the telescopic guide trough (14) is extended at least partially relative to the base guide trough (12), **characterised in that** arranged on the fastening conveyor section (4) is a cap (50) for the raised installation of an end (12b) of the base guide trough (12) facing away from the telescopic conveyor section (8), with the base guide trough (12) having a slope in the direction of the telescopic conveyor section (8), and that on the base conveyor section (4), a wedge element (60) is held such that it can be moved in and counter to the direction of conveyance and is coupled to the or a telescopic conveyor section (8), wherein in the retracted position the base guide trough (12), with its end (12a) facing the telescopic conveyor section, rests on a starting area of the wedge element (60) at a first height above or immediately on the base conveyor section (4), and in the extended position the base guide trough (12), with its end (12a) facing the telescopic conveyor section (8), rests on an end area of the wedge element (60) at a second height above the base conveyor section (4), wherein the second height is greater than the first height.

2. Telescopic conveyor belt according to claim 1, **characterised in that** several consecutive telescopic conveyor sections (8, 10, 11) can be extended and retracted telescopically relative to the base conveyor section (4), in and counter to the direction of extension (7).

3. Telescopic conveyor belt according to claim 1 or 2, **characterised in that** assigned to each telescopic conveyor section (8, 10, 11) is a telescopic guide trough (14, 16, 17', 17"), with an end of each telescopic guide trough facing away from the base conveyor section (4) being coupled to an extension end (8a, 10a, 11 a) of the respective telescopic conveyor section (8, 10, 11).

4. Telescopic conveyor belt according to one of the preceding claims, **characterised in that** each telescopic conveyor section (8,10,11) is assigned several telescopic guide troughs, respectively comprising a pull-out guide trough (14', 16', 17') and at least one sequential guide trough (14", 16", 17") coupled to it, with an end of each pull-out guide trough facing away from the base conveyor section (4) being coupled to an extension end (8a, 10a, 11a) of the respective telescopic conveyor section and an end of each pull-out guide trough facing the base conveyor section (4) being coupled to a sequential guide trough via a limit stop that limits extension.

5. Telescopic conveyor belt according to one of the preceding claims, **characterised in that** an extension end (8a, 10a, 11a) of a telescopic conveyor section (8, 10, 11) is coupled, with vertical play, to an end of a telescopic guide trough (14, 16) or a pull-out guide trough (14', 16', 17') facing away from the base conveyor section.

6. Telescopic conveyor belt according to claim 5, **characterised in that** a vertical slot (66) is arranged on the telescopic guide trough (14, 16) or on each pull-out guide trough (14', 16', 17') and a fastening bolt (64) that engages through the slot (66) is arranged on the extension end (8a, 10a, 11a) of each telescopic conveyor section (8, 10, 11), or

7. Telescopic conveyor belt according to one of the preceding claims, **characterised in that** the telescopic guide trough (14) is held on the base guide trough (12) such that it can be moved longitudinally by means of guide elements such as rollers (34, 36) or slide pieces (40).

8. Telescopic conveyor belt according to one of the preceding claims, **characterised in that** the or each pull-out guide trough (14', 16', 17') held on a sequential guide trough (14", 16", 17") that is coupled to it such that it can be moved longitudinally by means of guide elements such as rollers (34, 36) or slide pieces (40).

## Revendications

1. Bande transporteuse télescopique (2), comportant une section du transporteur de base (4), une section de transport télescopique (8), qui est tenue sur la section du transporteur de base (4) et qui peut se déployer et se rétracter de manière télescopique, dans le sens de l'extension (7) et aussi dans le sens contraire, ceci par rapport à la section du transporteur de base (4), une bande transporteuse (26) à circulation sans fin (26) qui constitue une surface de transport et qui, en cours de défilement, est menée le long d'une surface supérieure de la section du transporteur de base (4) et de la section de transport télescopique (8), une auge de guidage de base (12), qui est fermée sur le dessous, qui est placée entre la bande transporteuse (26) et la section du transporteur de base (4) et qui comporte une surface portante (20) servant à recevoir la bande transporteuse (26) et qui comprend également des éléments de guidage surélevés (22) qui suivent latéralement la surface portante (20), et une auge de guidage télescopique (14), qui est fermée sur le dessous, qui est placée entre la bande transporteuse (26) et la section du transporteur de base (4) et qui comporte une surface portante (20) servant à recevoir la bande transporteuse (26) et qui comprend également des éléments de guidage surélevés (22) qui suivent latéralement la surface portante (20), **caractérisée en ce que** l'auge de guidage de base (12) est raccordée à la section du transporteur de base (4) et l'auge de guidage télescopique (14) est raccordée à une extrémité d'extension (8a) de la section de transport télescopique (8), **caractérisée en ce que** l'auge de guidage télescopique (14) peut se déployer et s'escamoter de manière télescopique, par rapport à l'auge de guidage de base (12), et **caractérisée en ce que** la bande transporteuse télescopique (2) est ajustable entre une position emboîtée, dans laquelle la section de transport télescopique (8) est rétractée, ceci par rapport à la section du transporteur de base (4), et
**caractérisée en ce que** l'auge de guidage télescopique (14) est rétractée de manière télescopique, par rapport à l'auge de guidage de base (12), et une position déployée dans laquelle la section de transport télescopique (8) se déploie du moins en partie, ceci par rapport à l'auge de guidage de base (12),
**caractérisée en ce qu'**il est disposé, sur la section du transporteur de base (4), un couvercle (50) pour l'installation surélevée d'une extrémité (12b) de l'auge de guidage de base (12) tournée dans le sens contraire à celui de la section de transport télescopique (8), l'auge de guidage de base (12) étant disposée sur une pente dans le sens de la section de transport télescopique (8), et
**en ce qu'**un élément en forme de coin (60) est tenu sur la section du transporteur de base (4) de telle manière qu'il peut être déplacé dans le sens du transport) et aussi dans le sens contraire, et **en ce qu'**il est raccordé à une section de transport télescopique (8), **caractérisée en ce que**, dans la position rétractée, l'auge de guidage de base (12), dont l'extrémité (12a) est tournée vers la section de transport télescopique, est posée sur une surface de départ de l'élément en forme de coin (60) à une première hauteur au-dessus de la section du transporteur de base (4) ou bien immédiatement sur cette section, et en position déployée, l'auge de guidage de base (12) dont l'extrémité (12a) est tournée vers la section de transport télescopique (8), est posée sur une surface d'arrivé de l'élément en forme de coin (60) à une deuxième hauteur au-dessus de la section du transporteur de base (4), la deuxième hauteur étant supérieure à la première hauteur.

2. Bande transporteuse télescopique selon la revendication 1, **caractérisée en ce que** plusieurs sections successives (8, 10, 11) du transporteur télescopique peuvent se déployer et s'escamoter de manière télescopique, dans le sens de l'extension (7) et aussi dans le sens contraire, ceci par rapport à la section du transporteur de base (4).

3. Bande transporteuse télescopique selon la revendication 1 ou 2, **caractérisée en ce que** qu'il est affecté à chaque section (8, 10, 11) du transporteur télescopique une auge de guidage télescopique (14, 16, 17', 17"), **caractérisée en ce qu'**une extrémité de chaque auge de guidage télescopique tournée vers la section du transporteur de base (4) est raccordée à une extrémité d'extension (8a, 10a, 11a) de la section respective du transporteur télescopique (8, 10, 11).

4. Bande transporteuse télescopique selon l'une quelconque des revendications précédentes, **caractérisée en ce que** chaque section de transport télescopique (8, 10, 11) se voit affecter plusieurs auges de guidage télescopique, comportant respectivement une auge de guidage détachable (14', 16', 17') et au moins une auge de guidage séquentiel (14", 16", 17") qui lui est raccordée, une extrémité de chaque auge de guidage détachable étant tournée dans le sens contraire à celui de la section transporteuse de base (4) et étant raccordée à une extrémité d'extension (8a, 10a, 11a) de la section respective du transporteur télescopique, et une extrémité de chaque auge détachable qui est tournée dans le sens de la section transporteuse de base (4) étant raccordée à une auge de guidage séquentiel par l'intermédiaire d'un fin de course qui a pour fonction de limiter l'extension.

5. Bande transporteuse télescopique selon l'une quelconque des revendications précédentes, **caractérisée en ce qu'**une extrémité d'extension (8a, 10a, 11a) d'une section de transport télescopique (8, 10, 11) est raccordée, avec un jeu vertical, à une extrémité d'une auge de guidage télescopique (14, 16) ou d'une auge de guidage détachable (14', 16', 17') tournée dans le sens contraire à celui de la section transporteuse de base.

6. Bande transporteuse télescopique selon l'une quelconque des revendications précédentes, **caractérisée en ce qu'**une rainure verticale (66) est disposée sur l'auge de guidage télescopique (14, 16) ou sur chaque auge de guidage détachable (14', 16', 17') et **en ce qu'**un boulon de fixation (64) qui passe à travers la rainure (66) est disposé sur l'extrémité d'extension (8a, 10a, 11a) d'une section de transport télescopique (8, 10, 11) ou vice versa.

7. Bande transporteuse télescopique selon l'une quelconque des revendications précédentes, **caractérisée en ce que** l'auge de guidage télescopique (14) est tenue sur l'auge de guidage de base (12), de sorte qu'elle peut être déplacée horizontalement au moyen de dispositifs de guidage comme par exemple des rouleaux (34, 36) ou des glissières (40).

8. Bande transporteuse télescopique selon l'une quelconque des revendications précédentes, **caractérisée en ce que** chaque auge de guidage détachable (14', 16', 17') est tenue sur une auge de guidage séquentielle qui lui est raccordée (14", 16", 17'"), ce qui fait qu'elle peut être déplacée horizontalement au moyen de dispositifs de guidage comme par exemple des rouleaux (34, 36) ou des glissières (40).
